# EUROPEAN PATENT APPLICATION

(11) **EP 3 159 852 A1**
(43) Date of publication of application: **26.04.2017**
(21) Application number: 15810593.2
(22) Date of filing: 15.01.2015
(51) Int. Cl.: G07C 5/08, G05B 23/02

(54) **REAL-TIME VEHICLE OPERATION MONITORING SYSTEM AND METHOD BASED ON MOBILE TERMINAL**

(30) Priority: 20.06.2014 CN 201410283185
(71) Applicant: Launch Software Development Co., Ltd., Shenzhen, Guangdong 518000 (CN)
(72) Inventor: LIU, Jun, Guangdong 518000 (CN); LI, Jianfeng, Guangdong 518000 (CN)
(74) Representative: Krauns, Christian
(86) International application number: PCT/CN2015/070775
(87) International publication number: WO 2015/192652

(57) **Abstract**

The present invention relates to a real-time vehicle running monitoring system and method based on a mobile terminal. The real-time vehicle running monitoring system includes a monitoring connector, a server, and a mobile terminal. The monitoring connector is inserted into a vehicle OBD port, the monitoring connector communicates with the server wirelessly, and the server communicates with the mobile terminal. The monitoring connector obtains signals transmitted by a vehicle electronic control system via the vehicle OBD port in real time. The monitoring connector transmits the signals to the server via wireless network. The mobile terminal sends a request for data to the server regularly. The mobile terminal processes the data and displays the processed data after the server returns the data. The present invention further provides a real-time vehicle monitoring method based on a mobile terminal. The real-time vehicle running monitoring system and method based on a mobile terminal of the present invention achieve the purpose that the mobile terminal can monitor vehicle running status in real time.

## Description

### CROSS REFERENCE TO RELATED APPLICATIONS

This application claims priority to Chinese Patent Application No. 201410283185.1, entitled "REAL-TIME VEHICLE OPERATION MONITORING SYSTEM AND METHOD BASED ON MOBILE TERMINAL" and filed on June 20, 2014, which is hereby incorporated in its entireties by reference.

### FIELD OF THE TECHNICAL

The present disclosure relates to vehicle diagnosis technology, and particularly to a real-time vehicle running monitoring system and method based on a mobile terminal.

### BACKGROUND

At present, both at home and abroad, vehicle running status monitoring and fault diagnosis information are generally provided in offline mode. After a vehicle experiences a fault, the vehicle is delivered to the maintenance department of auto 4S stores or other maintenance stations. Diagnosis tools provided by the manufacture of the vehicle are used to diagnose the fault through an OBD port. The OBD port is a communication port of a vehicle monitoring system, and is used to obtain fault code for repair, and is further used to provide various running status information.

Vehicle running status information, such as vehicle running speed, engine speed, engine temperature, running mileage, light status, running time, gear, seat belt status, vehicle door status, and the like, are generally displayed on the dashboard in the cab. When the user is not in the vehicle cab, the user cannot obtain the running status of the vehicle. In the market, there is no product which can provide a solution for monitoring the vehicle running status in real time through a mobile terminal.

Furthermore, the present technology cannot monitor various vehicles. The function of detecting fault code provided by the 4S store is relatively simple, and real-time monitoring for individual users cannot be provided. Also, in the market, there is no monitoring product based on a mobile terminal for vehicle owners.

### SUMMARY

Therefore, a purpose of the present invention is to provide a real-time vehicle monitoring system based on a mobile terminal, which enables the mobile terminal to monitor vehicle running status in real time.

Another purpose of the present invention is to provide a real-time vehicle monitoring method based on a mobile terminal, which enables the mobile terminal to monitor vehicle running status in real time.

To realize the above-mentioned purposes, the present invention provides a real-time vehicle monitoring system based on a mobile terminal. The monitoring system includes a monitoring connector, a server, and a mobile terminal. The monitor connector is inserted into a vehicle OBD port, the monitor connector communicates with the server wirelessly, and the server communicates with the mobile terminal. The monitor connector obtains signals transmitted by a vehicle electronic control system via the vehicle OBD port in real time. The monitoring connector transmits the signals to the server via wireless network. The mobile terminal sends a request for data to the server regularly. The mobile terminal processes the data and displays the processed data after the server returns the data.

Wherein, the mobile terminal is a mobile phone, a tablet computer, or a PDA

Wherein, the monitoring connector communicates with the server via WIFI, Bluetooth, or 3G.

Wherein, the mobile terminal displays the processed data via a chart.

Wherein, the mobile terminal displays the processed data in a display interface which is similar to a dashboard in a vehicle cab.

Wherein, when some vehicle running status exceeds a preset value, the mobile terminal outputs warning information.

The present invention further provides a real-time vehicle running monitoring method based on a mobile terminal, which includes the following steps.

Step 10, inserting a monitoring connector into a vehicle OBD port, and igniting an engine to start the engine.

Step 11, obtaining signals in real time by the monitoring connector, wherein the signals are transmitted by a vehicle electronic control system via the vehicle OBD port.

Step 12, transmitting the signals via the monitoring connector to the server via a wireless network until the engine is shut off.

Step 13, opening a monitoring application installed in the mobile terminal.

Step 14, sending a request for data to the server regularly by the mobile terminal.

Step 15, processing the data and displaying the processed data by the mobile terminal after the server returns the data.

Wherein, the monitoring method further includes a step of outputting warning information by the mobile terminal when some vehicle running status exceeds a preset value.

Wherein, the monitoring method further includes a step of logging into the server through the mobile terminal.

Wherein, the monitoring method further includes a step of setting vehicle types of monitored vehicles through the mobile terminal.

In conclusion, the present invention provides a real-time vehicle running monitoring system and method to achieve the purpose that the mobile terminal can monitor vehicle running status in real time. When the vehicle running status becomes abnormal, the present invention outputs abnormality prompt through the user's mobile terminal.

### BRIEF DESCRIPTION OF THE DRAWINGS

Illustrated embodiments of the present invention are described in detail in conjunction with the accompanying drawings, to make the technical solution and other beneficial effects of the present invention be apparent.
FIG. 1 is a principle construction diagram of a real-time vehicle running monitoring system based on a mobile terminal of the present invention.
FIG. 2 is a flow chart of a real-time vehicle running monitoring method based on a mobile terminal of the present invention.
FIG. 3 is a flow chart of a server in the real-time vehicle running monitoring method based on a mobile terminal in accordance with a preferred embodiment of the present invention.
FIG. 4 is a flow chart of a client in the real-time vehicle running monitoring method based on a mobile terminal in accordance with a preferred embodiment of the present invention.

### DETAILED DESCRIPTION OF ILLUSTRATED EMBODIMENTS

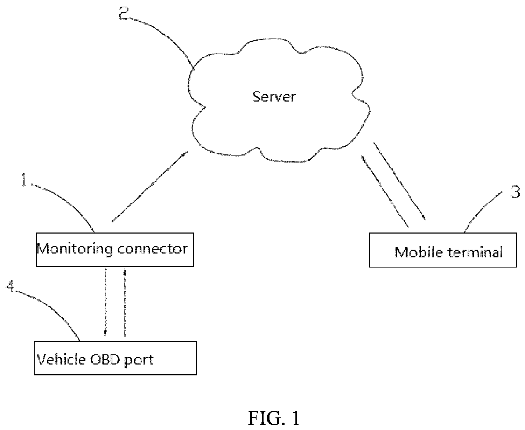

Referring to FIG. 1, FIG. 1 is a principle construction diagram of a real-time vehicle running monitoring system based on a mobile terminal of the present invention. The real-time vehicle running monitoring system based on a mobile terminal includes a monitoring connector 1, a server 2, and a mobile terminal 3. The monitoring connector 1 is inserted into a vehicle OBD port 4. The monitoring connector 1 communicates with the server 2 wirelessly. The server 2 communicates with the mobile terminal 3. The monitoring connector 1 obtains signals transmitted by a vehicle electronic control system via the vehicle OBD port 4 in real time. The monitoring connector 1 transmits the signals to the server 2 via wireless network. The mobile terminal 3 sends a request for data to the server 2 regularly. After the server 2 returns data, the mobile terminal 3 processes the data and displays the processed data.

The mobile terminal 3 can be a mobile phone, a tablet computer, a personal digital assistant (PDA), or the like. The monitoring connector 1 can communicate with the server 2 via WIFI (Wireless Fidelity, a technology for connecting personal computers, handheld devices (for example, PDAs, mobile phones), and the like together in a wireless manner), Bluetooth, or 3G. WIFI technology is used in telecommunication technology. If WIFI is not used, Bluetooth can also be used to monitor the running status of the vehicle in real time. However, comparing to WIFI, the transmission distance of the Bluetooth is shorter, and Bluetooth is limited to point to point transmission. The mobile terminal 3 can display the data via a chart, and can also display the data in a display interface which is similar to the dashboard in the vehicle cab. When some running status of the vehicle exceeds a preset value, the mobile terminal 3 outputs warning information. For example, when the vehicle experiences a fault, the system gives users a warning via ringing.

As an example, a mobile phone is used as the mobile terminal. Firstly, the user ensures that the monitoring connector had been inserted into the vehicle OBD port. The monitoring connector obtains signals transmitted by the vehicle electronic control system via the vehicle OBD port in real time. The monitoring connector transmits the signals to the server via wireless network. The user opens the monitoring application installed in the mobile phone. The monitoring application sends a request for data to the server regularly. After the server returns the data, the monitoring application processes the data and displays the data via a chart. In the technical solution of the present invention what needed is only the monitoring connector, which results in high efficiency and high real-time. As the vehicle running status can be displayed on the mobile phone, the vehicle running status can be monitored in real time and remotely, thus the user can obtain the vehicle running status even if the user does not stay in the vehicle cab.

The present invention fully utilizes advantages of present communication technical, such as features of smart phones which include high speed data process, portability, wide popularization, wireless data transmission like WIFI and Bluetooth, together with the vehicle detecting technology, to solve the problems of the present technology perfectly, thus market vacancy can be filled efficiently.

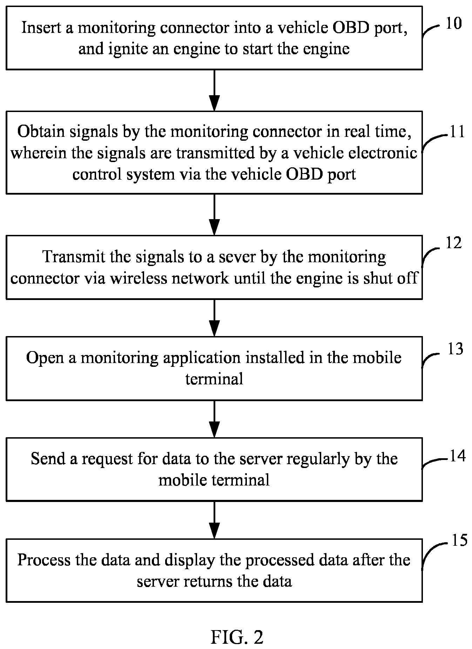

FIG. 2 is a flow chart of a real-time vehicle running status monitoring method based on a mobile terminal of the present invention. The method includes the following steps.

Step 10, inserting a monitoring connector into a vehicle OBD port, and igniting an engine to start the engine.

Step 11, obtaining signals by the monitoring connector in real time, wherein the signals are transmitted by a vehicle electronic control system via the vehicle OBD port.

Step 12, transmitting the data to the server via wireless network until the engine is shut off.

Step 13, opening a monitoring application installed in the mobile terminal by a user.

Step 14, sending a request for data to the server regularly by the mobile terminal.

Step 15, processing the data and displaying the processed data after the server returns the data.

The method further includes the following steps: outputting warning information when some vehicle running status exceeds a preset value; logging into the server through the mobile terminal; and setting vehicle types of monitored vehicles through the mobile terminal.

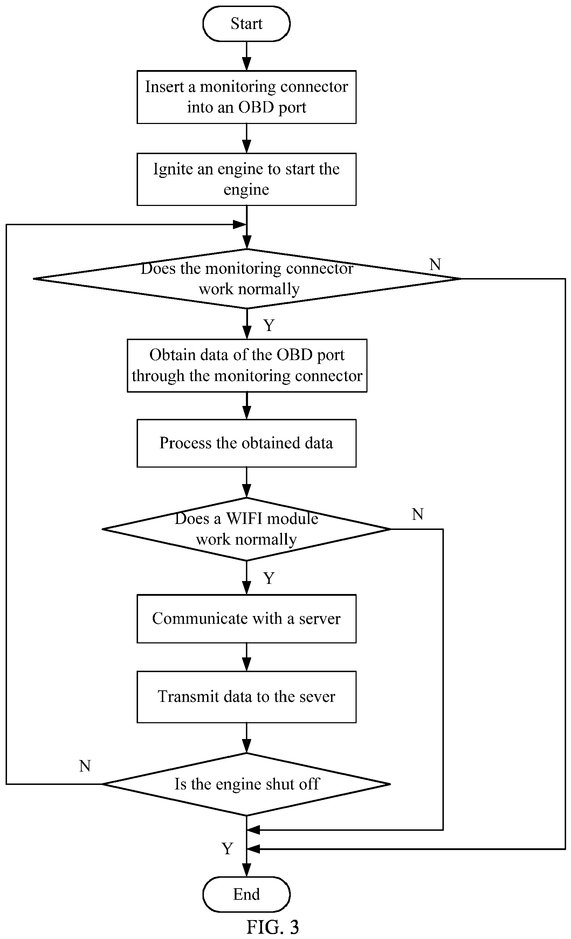

FIG. 3 is a flow chart of the server in the real-time vehicle running status monitoring method based on a mobile terminal in accordance with a preferred embodiment of the present invention. The following describes the procedure of the server. Firstly, the user inserts the monitoring connector into the vehicle OBD port, and then ignites the engine to start the engine. At this point, if the monitoring connector works normally, the monitoring connector will obtain signals transmitted by the vehicle electronic control system via the vehicle OBD port in real time. If the WIFI module also works normally, the monitoring connector sends the obtained data to designated server address. The data is sent continuously until the engine is shut off.

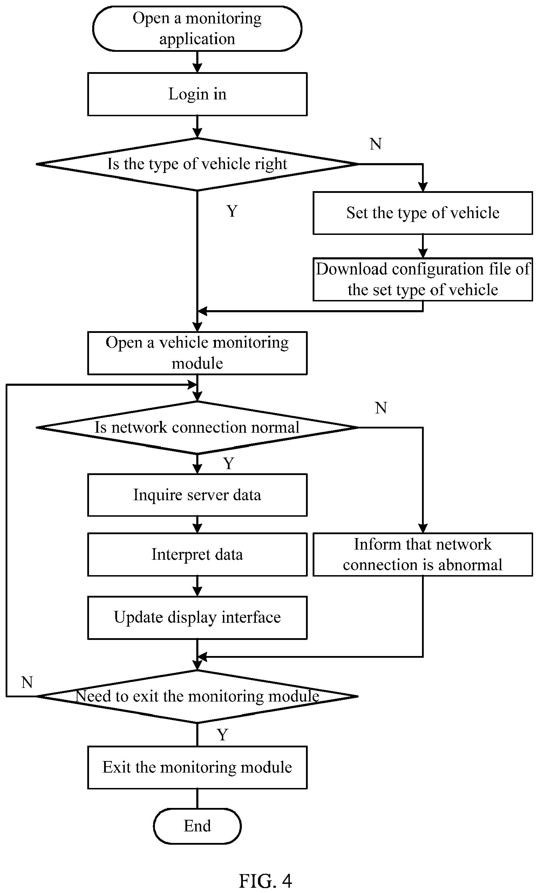

FIG. 4 is a flow chart of the client in the real-time vehicle running status monitoring method based on a mobile terminal in accordance with a preferred embodiment of the present invention. The following describes the procedure of the client. A mobile phone is used as an example. The user opens a monitoring application installed in the mobile phone, and logs into the system by typing a user name and password. If the monitoring application is used for the first time, the user needs to select the vehicle type, and the configuration file corresponding to the selected vehicle type is downloaded. When the user opens the vehicle monitoring interface, the client sends a request for vehicle status data to the server in an interval of ten seconds (time can be customized). If the network is abnormal, an abnormal network warning is outputted. If the data is obtained normally, the data is processed immediately, and the monitoring interface is updated in real time until the user selects to exit the monitoring application.

The real-time vehicle running monitoring method based on a mobile terminal of the present invention includes a number of advantages. Vehicle running status can be monitored in real time, at any time and anywhere, which is convenient and quick. The user can obtain the vehicle running status on condition that the mobile phone of the user has WIFI or 3G network function. If some vehicle running status exceeds a preset value, the monitoring application outputs a prompt or warning information. When the user does not stay in the vehicle cab, the vehicle running status can also be monitored in real time, thus it can be used in the rental car industry and the car safety industry. The display interface is similar to the dashboard of the vehicle cab, which is simple and intuitive.

In conclusion, the present invention provides a real-time vehicle running monitoring system and method to achieve the purpose that the mobile terminal can monitor vehicle running status in real time. When the vehicle running status is abnormal, the present invention can output abnormality prompt through the user's mobile terminal. The running status of various vehicle can also be monitored.

From the above, for those skilled in the art, they can make various changes and transformations according to the technical solution and technical conception of the present invention, while all of the changes and transformations shall fall within the protection scope of the appended claims of the present invention.

## Claims

1. A real-time vehicle running monitoring system based on a mobile terminal, comprising:
a monitoring connector;
a server; and
a mobile terminal;
wherein the monitoring connector is inserted into a vehicle OBD port; the monitoring connector communicates with the server wirelessly; the server communicates with the mobile terminal; the monitoring connector obtains signals transmitted by the vehicle electronic control system via the vehicle OBD port in real time; the monitoring connector transmits the signals to the server via wireless network; the mobile terminal sends a request for data to the server regularly; and the mobile terminal processes the data and displays the processed data after the server returns the data.

2. The real-time vehicle running monitoring system based on a mobile terminal of claim 1, wherein the mobile terminal is a mobile phone, a tablet computer, or a PDA.

3. The real-time vehicle running monitoring system based on a mobile terminal of claim 1, wherein the monitoring connector communicates with the server via WIFI, Bluetooth, or 3G.

4. The real-time vehicle running monitoring system based on a mobile terminal of claim 1, wherein the mobile terminal displays the data via a chart.

5. The real-time vehicle running monitoring system based on mobile terminal of claim 1, wherein the mobile terminal displays the data in a display interface which is similar to a dashboard in the vehicle cab.

6. The real-time vehicle running monitoring system based on a mobile terminal of claim 1, wherein when some vehicle running status exceeds a preset value, the mobile terminal outputs warning information.

7. A real-time vehicle running monitoring method based on a mobile terminal, comprising:
step 10, inserting a monitoring connector into a vehicle OBD port, and igniting an engine to start the engine;
step 11, obtaining signals by the monitoring connector in real time, wherein the signals are transmitted by a vehicle electronic control system via the vehicle OBD port;
step 12,transmitting the signals to a sever by the monitoring connector via wireless network until the engine is shut off;
step 13, opening a monitoring application installed in the mobile terminal;
step 14, sending a request for data to the server regularly by the mobile terminal; and
step 15, processing the data and displaying the processed data after the server returns the data.

8. The real-time vehicle running monitoring method based on a mobile terminal of claim 7, further comprising:
outputting warning information when some vehicle running status exceeds a preset value.

9. The real-time vehicle running monitoring method based on a mobile terminal of claim 7, further comprising:
logging into the server through the mobile terminal.

10. The real-time vehicle running monitoring method based on a mobile terminal of claim 7, further comprising:
setting vehicle types of monitored vehicle through the mobile terminal.
